# EUROPEAN PATENT APPLICATION

(11) **EP 0 810 395 A1**
(43) Date of publication of application: **03.12.1997**
(21) Application number: 96932049.8
(22) Date of filing: 26.09.1996
(51) Int. Cl.: F16J 1/22

(54) **CONNECTING STRUCTURE OF PISTON AND CONNECTING ROD**

(30) Priority: 26.09.1995 JP 271743/95
(71) Applicant: ISUZU MOTORS LIMITED, Shinagawa-ku, Tokyo 140 (JP)
(72) Inventor: HORIUCHI, Shigeaki Isuzu Advanced Eng. Center Ltd, Kanagawa-ken 252 (JP)
(74) Representative: Niedmers, Ole, Dipl.-Phys.
(86) International application number: JP9602840
(87) International publication number: WO9712163

(57) **Abstract**

A cooling oil chamber (5) comprising an annular groove is provided in a lower surface (2b) of a crown portion (2a) of a piston main body (2). A ceiling wall (61a) of an inverted cup-shaped inner sleeve (61) fitted in a skirt portion (2c) of the piston main body (2) is brought into abutment with the lower surface (2b) of the piston crown portion (2a) so as to close the cooling oil chamber (5). An upper half portion of a semi-cylindrical oscillating guide member (9) is inserted into a square hole (60) formed in the ceiling wall (61a) of the inner sleeve (61) so as to be brought into abutment with the lower surface (2b) of the piston crown portion (2a). A pair of arms (16a) having an arc-like cross section are formed on a smaller end portion of a connecting rod (21) in such a manner as to project in a crank shaft direction. A lower half portion of the oscillating guide member (9) is brought into engagement with an upper surface (16a) in the form of a cylindrical concave surface of the pair of arms (16) and a lower surface (16b) of the pair of arms (16) is brought into engagement with a pair of cylindrical recessed portion (23a) provided in an upper end surface of a seat tube (23). The seat tube (23) is fitted into the inner sleeve (61) and the upper end surface of the seat tube (23) is brought into abutment with an intermediate stepped portion (61c) of the inner sleeve (61) and a lower surface of the seat tube (23) is supported on a projecting piece (27) of the skirt portion (2c).

## Description

### TECHNICAL FIELD

The present invention relates to a connecting structure between a piston and a connecting rod in an internal combustion engine, and particularly to a connecting structure between a piston and a piston rod, in which a piston assembly is light in weight, an oscillating center of the connecting rod of the piston is close to a piston crown, and a slap sound of the piston is small.

### TECHNICAL BACKGROUND

According to the connecting structure between a piston and a connecting rod disclosed in Japanese Patent Application Laid-Open No. 249673/1992, as compared with the conventional connecting structure by way of a piston pin, an oscillating center of a connecting rod with respect to a piston is considerably close to a piston crown surface, and if an arm of a crank shaft and a connecting rod are lengthened through that amount, the displacement of the cylinder increases without changing a dimension of a cylinder block to enable increasing an output of the engine. In the aforementioned connecting structure between a piston and a connecting rod, within a skirt portion of a piston body, a small end of a connecting rod in the form of a bowl is slidably supported between a hemispherical oscillation guide member and an annular cavity having a hemispherical depressed surface. The annular cavity is supported on a holding tube screwed in the skirt portion. Since a clearance of a sliding portion of the small end of the connecting rod changes with a screwing quantity of the holding tube, it takes time for assembly and adjustment.

In view of the foregoing, the present applicant had applied for a connecting structure between a piston and a connecting rod, as disclosed in the specification of Japanese Patent Application Laid-Open No. 12,228/1995 (Patent Application No. 176,003/1993) and U.S. Patent No. 5,413,074, in which a small end of a connecting rod is formed integrally with a pair of arms, which are semicircular in section, projecting in a direction of a crank shaft, semicircular columnar oscillating guide members are engaged with upper surfaces in the form of a tubular depressed surface of the pair of arms, a pair of tubular depressed portions formed in an upper end wall of the annular cavity are engaged with the lower surface of the pair of arms, these are fitted in an inverted cup-shaped inner sleeve, the inner sleeve being fitted in a skirt portion of a piston body, a top wall of the inner sleeve is placed in contact with the lower surface of a piston crown, and a lower end of the annular cavity is supported on a projecting portion of the skirt portion. According to the aforementioned connecting structure between a piston and a connecting rod, a clearance of the sliding portion of the small end of the connecting rod is not changed by assembling but is determined merely by selecting the oscillating guide member having a suitable dimension.

However, even in the aforementioned connecting structure between a piston and a connecting rod, there are many superposing surfaces for which a processing or machining accuracy is required, and management or maintenance of the clearance of the sliding portion of the small and of the connecting rod is difficult. That is, the clearance of the sliding portion of the small end of the connecting rod is decided according to the superposing surface of the lower surface of the piston crown portion and the upper surface of the top wall of the inner sleeve, the superposing surface of the lower surface of the top wall of the inner sleeve and the upper surface of the oscillating guide member, the superposing surface of the intermediate shoulder of the inner sleeve and the upper and surface of the annular cavity and the superposing surface of the lower end surface of the annular cavity and the projecting piece of the skirt portion, totalling eight surfaces. The maintenance of the machining accuracy it difficult, and machining expenses increase. Even if a combination of parts is selected according to a machining tolerance of parts, since the superposing surfaces participated in the clearance of the sliding portion of the small end of the connecting rod are six, the cumulated tolerance of parts is so large that the productivity is low. It is not preferable in terms of the fact that the clearance of the sliding portion of the small end of the connecting rod changes due to the thermal expansion of the top wall of the inner sleeve in contact with the combustion chamber.

Further, in the aforementioned connecting structure between a piston and a connecting rod, the center of gravity of a piston assembly having an inner sleeve, an oscillation guide member, an annular cavity, a piston ring and the like mounted on the piston body is at a level lower than the center of oscillation of the connecting rod relative to the piston, and therefore, the skirt portion of low rigidity impinges upon the cylinder. At this time, a fine slip occurs between the upper surface of the projecting piece of the skirt portion for supporting the annular cavity and the lower end surface of the annular cavity, and when the clearance therebetween gradually increases due to the abrasion, the top surface of the piston possibly abuts against the cylinder head.

### DISCLOSURE OF THE INVENTION

In view of the above-described problems, it is an object of the present invention to provide a connecting structure between a piston and a connecting rod in which the number of superposing surfaces for which the required machining accuracy is reduced, and maintenance of a clearance of a sliding portion of a small end of a connecting rod is facilitated.

It is a further object of the present invention to provide a connecting structure between a piston and a connecting rod in which an axial length of an annular cavity is shortened, and a center of gravity of a piston is made close to a center of oscillation of a connecting rod whereby a skirt portion is prevented from impinging upon a cylinder due to the goose-neck or swing motion of the piston, and the abrasion between an annular cavity and a projecting piece of a skirt portion is prevented.

Another object of the present invention is to provide a connecting structure between a piston and a connecting rod in which an oscillation guide member is directly superposed on a lower surface of a piston crown (the bottom wall of a combustion chamber) so as to reduce the number of superposing surfaces and reduce an cumulated tolerance.

For solving the aforementioned problems according to the present invention, there is provided an arrangement characterized in that a pair of left and right arms which are semicircular in section projecting axially of a crank shaft are provided on a small end of a connecting rod, a flat upper surface of a semicircular oscillation guide member is placed in contact with a lower surface of a piston crown, a cup-shaped annular cavity is fitted in a skirt portion of a piston body, an opening which is square in section for inserting the small end of the connecting rod is provided in a diametrically central part of the annular cavity, an upper surface in the form of a cylindrical depressed surface of the pair of arms of the small end of the connecting rod are engaged with a lower surface which is semicircular in cross-section of the oscillation guide member, and the arm of the small end of the connecting rod is engaged with the cylindrical depressed portion formed in an upper wall surface of the annular cavity so that the small end of the connecting rod is held between oscillation guide member and the annular cavity.

### FUNCTION OF THE INVENTION

In the present invention, a lower half portion of a semicircular columnar-shaped oscillation guide member is placed in contact with an upper surface in the form of a cylindrical depressed surface of a pair of arms formed on a small end of a connecting rod, and an upper half portion of the oscillation guide member is placed in contact with a lower surface of a piston crown. Thereby, the superposing surfaces anticipated in a clearance of a sliding portion of the small end of the connecting rod is reduced to four surfaces in number, and as a result, a cumulated tolerance of parts is reduced, and a machining expense is reduced, and a productivity is enhanced.

The upper surface of the oscillation guide member is placed in contact with the lower surface of the piston crown, and a lubricating oil is supplied from an oil passage extending through the oscillation guide member to the superposing surface between the upper surface of the oscillation guide member and the lower surface of the piston crown for cooling to prevent the clearance of the sliding portion of the small end of the connecting rod front being changed due to thermal expansion of the top wall of the inner sleeve in contact with the combustion chamber.

A projecting piece of a skirt portion supporting an annular cavity is located upward away from a lower end where a deformation of the skirt portion is large, and large notches are provided in front and rear portions of the peripheral walls of the skirt portion to prevent interference with a balance weight of a crank shaft. An axial dimension (height) of the annular cavity and the inner sleeve is shortened, and notches are provided in front and rear peripheral walls of the skirt portion so that the lower half portion of a piston assembly is reduced in weight and a center or gravity of the piston comes close to a center of oscillation of the connecting rod.

The axial dimension of the annular cavity is determined in consideration of the radius of curvature of the lower surface of the oscillation guide member and the strength of a cylindrical depressed portion of the annular cavity for supporting the small end of the connecting rod.

### BRIEF DESCRIPTION OF THE DRAWINGS

Fig. 1 shows a connecting structure between a piston and a connecting rod according to a first embodiment of the present invention, and particularly is a front sectional view thereof with a hatching of a piston body omitted.

Fig. 2 is a side sectional view showing the connecting structure.

Fig. 3 is a plan view showing an annular cavity in the connecting structure.

Fig. 4 is a side view showing an oscillation guide member in the connecting structure.

Fig. 5 is a front sectional view of a connecting structure between a piston and a connecting rod according to a second embodiment of the present invention.

Fig. 6 is a side sectional view showing the connecting structure.

Fig. 7 is a front sectional view of a connecting structure between a piston and a connecting rod according to a third embodiment of the present invention.

Fig. 8 is a side sectional view showing the connecting structure.

Fig. 9 is a front sectional view of a connecting structure between a piston and a connecting rod according to a fourth embodiment of the present invention.

Fig. 10 is a side sectional view showing the connecting structure.

Fig. 11 is a front sectional view showing main parts of the connecting structure in an enlarged scale.

Fig. 12 is a plan view showing an annular cavity in the connecting structure.

Fig. 13 is a front sectional view showing the step of assembling the connecting structure in an enlarged scale.

### BEST MODE FOR CARRYING OUT THE INVENTION

### Embodiment 1

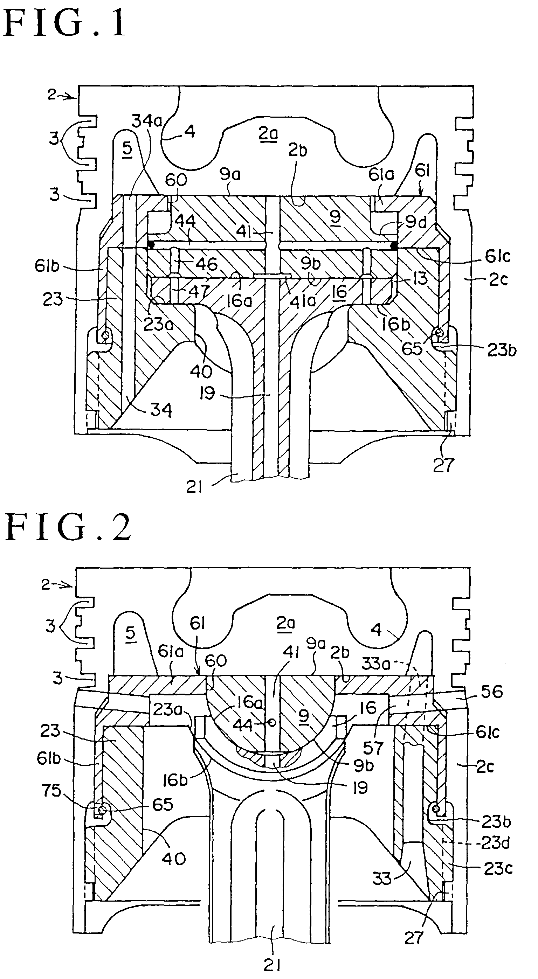

As shown in Figs. 1 and 2, a piston body 2 is provided with a combustion chamber 4 comprising asymmetrical depressions on an upper surface of a piston crown 2a, and a plurality of ring grooves 3 are provided in an upper half portion of an outer peripheral wall thereof. A central portion of the piston crown 2a is projected downward so as to encircle a bottom of the combustion chamber 4. The piston crown 2a in formed in its lower surface 2b with a cooling oil chamber 5 comprising an annular groove so as to encircle the combustion chamber 4.

A connecting rod 21 has a small and integrally formed with a pair of left and right arms 16 which are semicircular or gutter-shape in section and extend in an axial direction of a crank shaft of an internal combustion engine. The pair of arms 16 have an upper surface formed with a continuous cylindrical depressed surface. The pair of arms 16 are held for oscillation by a semicircular columnar oscillation guide member 9 and an annular cavity 23 within an inner sleeve 61.

The oscillation guide member 9 has an upper surface 9a which extends through an angular opening 60 provided in a center of a top wall 61a of the inner sleeve 61 and is placed in contact with the lower surface 2b of the piston crown 2a. The oscillation guide member 9 has a lower surface 9b engaged with the upper surface 16a in the form of a cylindrical depressed surface of the pair of arms 16 for oscillation. The lateral dimension of the angular opening 60 is shorter than the overall length of the arm 16 in consideration that the cooling oil chamber 5 is defined by the top wall 61a. Therefore, the upper half portion of the oscillation guide member 9 provides with shoulders 9d by cutting the left and right end walls.

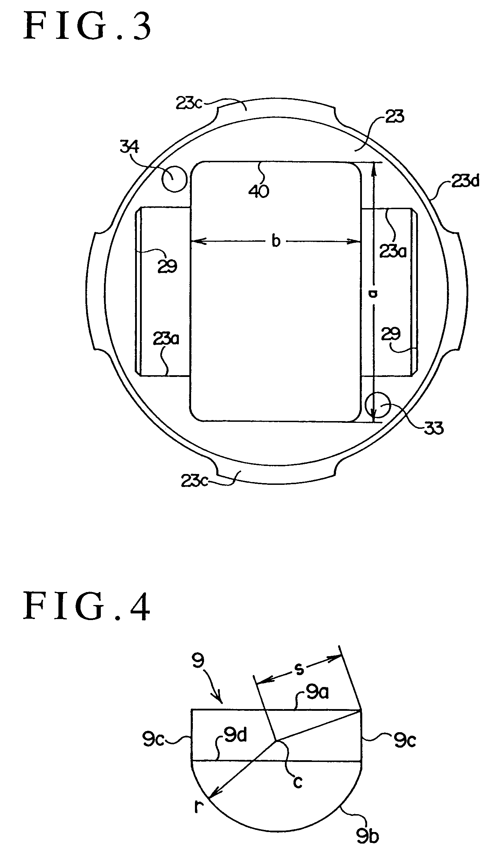

As shown in Fig 4, a side section of the oscillation guide member 9 is actually not semicircular but flat end wall surfaces 9c fitted in the angular opening 60 of the top wall 61a are provided on the upper half portion of the oscillation guide member 9. A spacing s between an intersection of the upper surface 9a and the end wall surface 9c and a center of curvature c of the lower surface 9b is the same as or less than the radius of curvature r of the lower surface 9b.

As shown in Fig. 2, the upper end surface of the annular cavity 23 having the upper half portion fitted in the inner sleeve 61 is placed in contact with an intermediate shoulder 61c formed on the inner surface of a peripheral wall 61b of the inner sleeve 61, and an outer peripheral wall of the intermediate portion of the annular cavity 23 is secured by a stop ring 65 to the inner surface of the lower end of the peripheral wall 61b of the inner sleeve 61. That is, in order to provide an assembly so that the annular cavity 23 is not slipped out of the inner sleeve 61, the stop ring 65 having a notch is elastically mounted in an annular groove provided in an inner surface of the peripheral wall 61b of the inner sleeve 61 via a deep and wide annular groove 23b provided in an outer surface of the peripheral wall of the intermediate portion of the annular cavity 23 and engaged with the upper wall of the annular groove 23b. The peripheral wall 61b of the inner sleeve 61 is provided with a plurality of slits 75 in communication with the annular groove in a peripheral spaced relation in consideration that the atop ring 65 is removed from the annular groove.

The annular cavity 23 is provided an opening 40 which is elongated in a direction vertical to the crank shaft, through which the connecting rod 21 extends, and a pair of cylindrical depressed portions 23a are formed on opposite side walls of the opening 40 on the upper end of the annular cavity 23. A lower surface 16b in the form of a cylindrical convex surface of the arm 16 is slidably supported in the cylindrical depressed portions 23a of the annular cavity 23. A clearance 13 (Fig. 1) between an side wall surface 29 (Fig. 3) of the cylindrical depressed portion 23a and the side surface of the arm 16 allows the relative sliding between the piston body 2 and the connecting rod 21 in a direction of the crank shaft (lateral direction in Fig. 1) to absorb an error between an arrangement spacing of a plurality of cylinders in a cylinder block and an arrangement spacing of a plurality of piston bodies 2 connected to the crank shaft through the connecting rod 21.

As shown in Fig. 3, a longitudinal dimension a of the opening 40 is longer than the overall length of the arm 16, and a lateral dimension b of the opening 40 is wider than the width (a longitudinal dimension) of the arm 16. When the pair of arms 16 is directed in a longitudinal direction of the opening 40, the small end of the connecting rod 21 can be inserted into the opening 40. The connecting rod 21 is than rotated by 90°, the lower surface 16b of the pair of arms 16 can be engaged and supported on the pair of cylindrical depressed portions 23a.

As shown in Fig. 1, after the oscillation guide member 9 and the small end of the connecting rod 21 has been mounted within the inner sleeve 61, the inner sleeve 61 is fitted in a skirt portion 2c of the piston body 2. The upper surface of the top wall 61a of the inner sleeve 61 and the upper surface 9a of the oscillation guide member 9 are respectively placed in contact with the lover surface 2b of the piston crown 2a, and the annular cavity 23 is hold between the intermediate shoulder 61c of the inner sleeve 61 and a plurality of projections 27 formed on the inner peripheral wall of the lower end of the skirt portion 2c. The projections 27 are disposed on the inner peripheral wall of the skirt portion 2c in a peripheral equi-distant relation, and project diametrally inward from the inner peripheral wall.

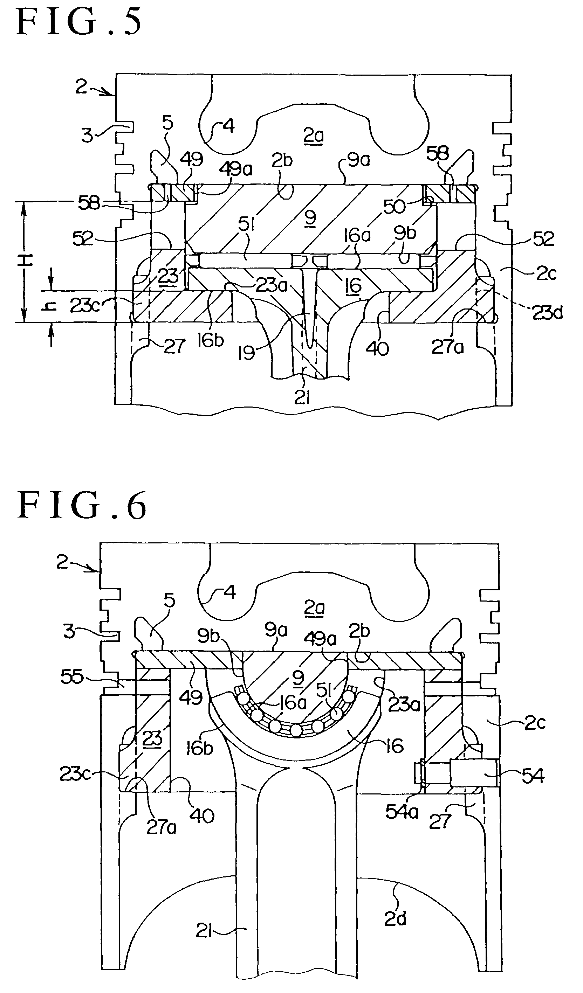

An shown in Fig. 3, the annular cavity 23 is provided on the outer peripheral wall of the lower end thereof with wide axial grooves 23d and projections 23c of the same number as the projections 27. The width (peripheral dimension) of the groove 23d is wider than that of the projection 27. When the annular cavity 23 is fitted in and engaged with the skirt portion 2c, the groove 23d is engaged with the projections 27, and the annular cavity 23 is forced into the skirt portion 2c. When the annular cavity 23 is then rotated by a predetermined amount, the projections 23c of the annular cavity 23 are superposed on the projections 27. The annular cavity 23 and the piston body 2 are secured by a diametral stop pin, not shown (refer a stop pin 54 in Fig. 6), so that the annular cavity 23 is not rotated relative to the piston body 2.

As shown in figs. 1 and 2, the cooling oil chamber 5 encircling the piston crown 2a of the piston body 2 is defined by the top wail 61a of the inner sleeve 61. Lubricating oil injected out of an oil jet (not shown) enters, during the operation of the engine, the annular cooling oil chamber 5 via an inlet oil passage 33 of the annular cavity 23 and an oil passage 33a of the inner sleeve 61, goes half round while cooling the piston crown 2a, and after this, returns to the crank chamber via an oil passage 34a of the inner sleeve 61 shown in Fig. 1, and an outlet oil passage 34 of the annular cavity 23. An accurate position of the oil passages 33 and 34 of the annular cavity 23 is shown in Fig. 3.

At shown in Fig. 1, lubricating oil from a hydraulic pump, not shown, cools the lower surface 2b of the piston crown 2a via an oil passage 41 of the oscillation guide member 9 from an internal oil passage 19 of the connecting rod 21, and lubricates the sliding portion between the upper surface 16a and the lower surface 16b of the pair of arms 16. In order to obtain the abovedescribed performance, the oscillation guide member 9 is provided with a wide inlet hole 41a in communication with the internal oil passage 19 of the connecting rod 21, the vertically extending oil passage 41, an oil passage 44 extending to both sideways from the middle of the oil passage 41, and an oil passage 46 opened from the oil passage 44 to the lower surface 9b. The enlarged lower end of the oil passage 46 is communicated with an oil passage 47 of the arm, and the lower end of the oil passage 47 is opened to the cylindrical depressed portion 23a of the annular cavity 23. Lubricating oil of the oil passage 46 lubricates the sliding portion between the lower surface 9b of the oscillation guide member 9 and the upper surface 16a of the arm 16, and lubricates the sliding portion between the lower surface 16b of the arm 16 and the cylindrical depressed portion 23a of the annular cavity 23 via the oil passage 47.

According to the present embodiment, the superposing surfaces participated in the clearance in the sliding portion of the arm 16 of the connecting rod 21 are less than those of prior art. Therefore, a machining expense is reduced, a productivity is enhanced, a cumulated tolerance of parts is small and a reliability is enhanced. The oscillation guide member 9, the connecting rod 21 and the annular cavity 23 are incorporated into the inner sleeve 61 to thereby enhance an assembling performance.

### Embodiment 2

In the embodiments shown in Figs. 5 and 6, a top wall plate 49 in place of the inner sleeve 61 is placed in contact with the lower surface 2b of the piston crown 2a to define the annular cooling oil chamber 5. During the operation of the engine, lubricating oil injected out of an oil jet, not shown, is supplied to the annular cooling oil chamber 5 via the inlet oil passage of the annular cavity 23 and an oil passage, not shown, of the top wall plate 49. Lubricating oil of the cooling oil chamber 5 drops into depressions 52 which are semicircular in section and are provided on left and right peripheral walls of the annular cavity 23, via a pair of oil holes 58 provided in the top wall plate 49. The semicircular columnar oscillation guide member 9 is shorten in lateral dimension at a portion above a shoulder 50. The upper surface 9a of the oscillation guide member 9 extends through an angular opening 49a provided in the top wall plate 49 and is placed in contact with the lower surface 2b of the piston crown 2a. The lower surface 9b of the oscillation guide member 9 is engaged for relative oscillation with the upper surface 16a in the form of a cylindrical depressed portions of the arm 16 of the connecting rod 21 through a pair of left and right roller bearings 51.

The upper end surface of the annular cavity 23 is placed in contact with the lower surface of the top wall plate 49, and the lower end surface of the annular cavity 23 is supported on the upper surface 27a of the projection 27 of the skirt portion 2c. The projection 27 of the skirt portion 2c is made upward away from the lower end where deformation of the skirt portion 2c is large. Notches 2d which are as large as possible are provided in left and right peripheral edges of the skirt portion 2c so as not to interfere with a balance weight, not shown, of the crank shaft. An axial dimension H of the annular cavity 23 is shortened and the notches 2d are provided in the skirt portion 2c whereby the lower half portion of the piston assembly is reduced in weight, and the center of gravity of the piston body 2 comes close to the center of oscillation of the connecting rod 21. The axial dimension H of the annular cavity 23 is determined in consideration of the radius of curvature r of the lower surface 9b of the oscillation guide member 9, a dimension h of the lower portion of the cylindrical depressed portions 23a supporting the small end of the connecting rod 21 and the strength of the annular cavity 23. The stop pin 54 extending through the skirt portion 2c of the piston body 2 and the annular cavity 23 is provided thereon to obstruct the rotation of the piston body 2 with respect to the connecting rod 21, and a stop ring 54a is secured to the inner end of the stop pin 54 so that the stop pin 54 is not slipped out.

According to the present embodiment, the provision of the top wall plate 49 achieves the closure of the cooling oil chamber 5, the positioning of the oscillation guide member 9, and the simplification of parts. Further, since no inner sleeve is provided, the wall thickness of the skirt portion 2c is made thicker by that amount to enhance the rigidity.

### Embodiment 3

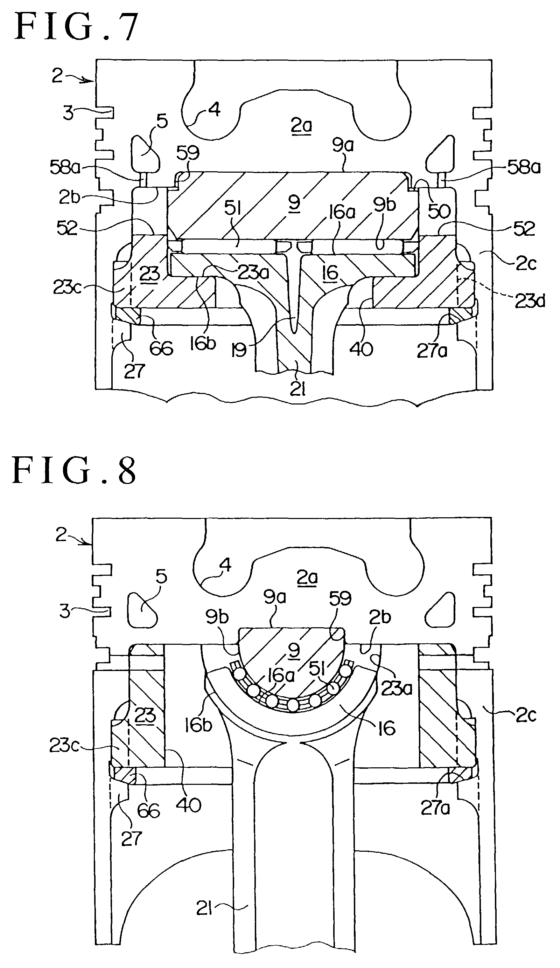

In the embodiments shown in Figs. 7 and 8, the cooling oil chamber 5 is molded by a well known salt core casting. The annular cavity 23 supporting the arm 16 of the connecting rod 21 has the upper end surface placed in contact with the lower surface 2b of the piston crown 2a, and the lower and surface thereof is supported on the upper surface 27a of the projection 27 of the skirt portion 2c through an elastic ring 66. The piston crown 2a is provided with oil holes 58a extending from the cooling oil chamber 5 to the depressions 52 of the annular cavity 23. An angular groove 59 for positioning the oscillation guide meter 9 and obstructing movement thereof is provided on the lower surface 2b of the piston crown 2a. Between the oscillation guide member 9 and the connecting rod 21 is disposed a well known roller bearing 51 with a retainer. The oscillation guide member 9 is engaged in advance with the angular groove 59 of the piston crown 2a, and the connecting rod 21 and the annular cavity 23 are inserted into the piston body 2, after which the elastic ring 66 capable of being enlarged in engaged between the projection 23c of the annular cavity 23 and the projection 27 of the skirt portion 2c, one or both surfaces of the elastic ring 66 being a conical form.

According to the present embodiment, since the load in a thrust direction acting on the piston body 2 is borne by the angular groove 59 of the piston crown 2a and the opposite wall surfaces of the oscillation guide member 9, a burden of load in the sliding portion or the arm 16 of the connecting rod 21 is relieved. That is, a rotating moment acting on the piston body 2 is small, and an impinging load of the skirt portion 2c with respect to the cylinder is relieved to suppress a slap sound and suppress an abrasion of the projections 27 which support the annular cavity 23 on the skirt portion 2c.

### Embodiment 4

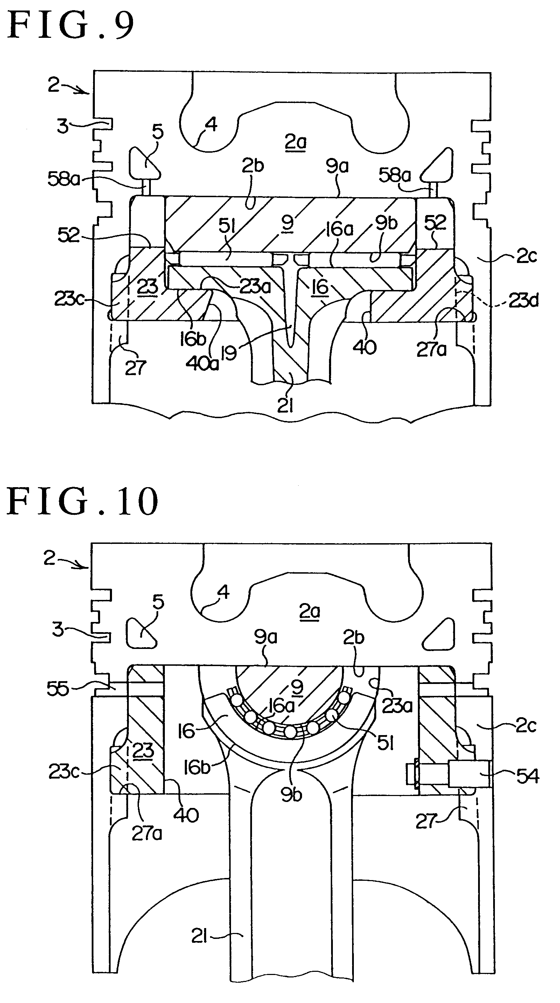

In the embodiments shown in Figs. 9 to 13, the roller bearing 51 with a retainer is disposed between the oscillation guide member 9 and the arm 16 of the connecting rod 21, and the upper surface 9a of the oscillation guide meter 9 and the upper end surface of the annular cavity 23 are placed in contact with the lower surface 2b of the piston crown 2a. The lower end surface of the annular cavity 23 is supported on the upper surface 27a of the projection 27 of the skirt portion 2c. The stop pin 54 is extended through the skirt portion 2c and the annular cavity 23 so as to obstruct the rotation of the piston body 2 with respect to the skirt portion 2c.

As shown in Fig. 9, oil is forcibly supplied from the internal oil passage 19 of the connecting rod 21 to the roller bearing 51, similar to the Figs. 2 to 4 embodiments. Lubricating oil in the cooling oil chamber 5 of the piston crown 2a drops through the the oil holes 58a into the pair Of left and right depressions 52 which are semicircular in section and are provided in the upper end surface of the annular cavity 23 and is supplied to the roller bearing 51. For this purpose, an intersecting portion between the opposite side walls of the oscillation guide member 9 and the lower surface 9b is obliquely cut.

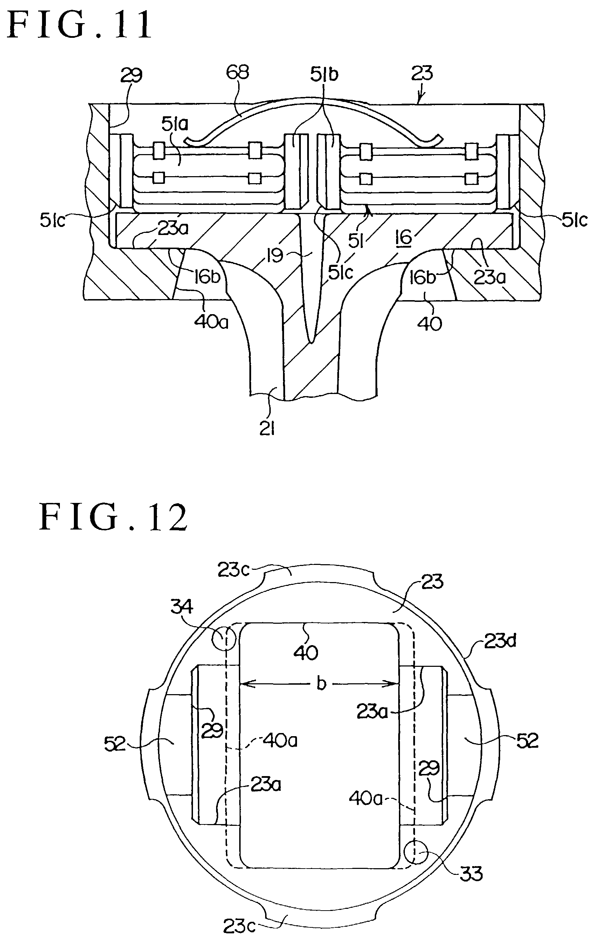

As shown in Fig. 11, the roller bearing 51 embraces a number of rollers 51a in a number of rectangular openings which are aligned on the retaining plate 51b curved arcwise. In the case where the roller bearing 51 with a retainer is disposed between the oscillation guide member 9 and the arm 16 of the connecting rod 21, since there is a difference in load exerting on the piston body 2 due to the oscillation forwardly of the connecting rod 21 and the oscillation rearwardly of the connecting rod 21, the roller bearing 51 it raised rearwardly so that the rollers 51a of the roller bearing 51 sometimes come in sliding contact with the rolling surface or the upper surface 16a of the arm 16 of the connecting rod 21 without rolling therealong. To avoid this, a plate spring 68 is interposed between the front and rear ends of the retaining plate 51b of the roller bearing 51 and the piston crown 2a or an immovable member. When during the reciprocating movement of the piston, the downward load from the piston body 2 to the arm 16 of the connecting rod 21 is small, and then the roller bearing 51 is returned to a neutral position by the force of the plate spring 68.

A difference between the diameter of the roller 51a of the roller bearing 51 and the thickness of the retaining plate 51b is 0.3 to 0.4 mm, and a clearance between the outer peripheral surface of the retaining plate 51b and the upper surface 16a Of the arm 16 of the connecting rod 21 is 0.15 to 0.2 mm. Similarly, a clearance between the lower surface 9b of the oscillation guide member 9 and the inner peripheral surface of the retaining plate 51b is 0.15 to 02 mm. The internal oil passage 19 provided in the connecting rod 21 is opened to the outer peripheral surface of the retaining plate 51b, but since the clearance between the lower or outer peripheral surface of the retaining plate 51b and the upper surface 16a of the arm 16 of the connecting rod 21 is narrow, lubricating oil is hard to uniformly flow to the outer peripheral surface of the retaining plate 51b and is harder to flow to the upper or inner peripheral surface of the retaining plate 51b. In view of this, the intersecting portion 51c between the opposite ends and the outer peripheral surface of the retaining plate 51b is obliquely cut to form an oil passage so that the lubricating oil may flow uniformly to the outer peripheral surface of the retaining plate 51b. A clearance between the pair of roller bearings 51 is secured to be approximately 0.5 mm.

Approximately 15° of an inclined surface or roundness is provided in the front and rear ends 16c of the upper surface 16a of the arm 16 of the connecting rod 21 so that the roller 51a of the roller bearing 51 is not disengaged from the upper surface 16a or the arm 16 of the connecting rod 21 but is returned to the upper surface 16a, at the maximum oscillation of the connecting rod 21.

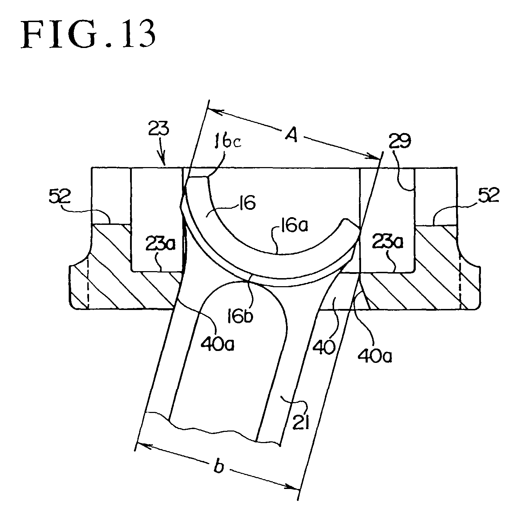

For lowering a surface pressure of the roller bearing 51 due to an inertia load of the annular cavity 23, it is necessary to increase the width A of the arm 16 of the connecting rod 21 and to lengthen a peripheral dimension of the upper surface 16a of the arm 16. As shown in Figs. 12 and 13, the width A of the arm 16 is restricted by a lateral dimension b of the opening 40 of the annular cavity 23. However, one of left and right lower edges 40a of the opening 40 is downwardly expanded whereby the width A of the arm 16 can be made larger than the dimension b of the opening 40. As shown in Fig. 13, in the state where the direction of the arm 16 of the connecting rod 21 is made perpendicular to the cylindrical depressed portions 23a and the connecting rod 21 is inclined with respect to the cylindrical depressed portions 23a of the annular cavity 23, the connecting rod 21 is inserted into the opening 40 along the lower edge 40a form the lower side of the opening 40, and the connecting rod 21 is rotated by 90°. Then, an assembly as shown in Fig. 11 is attained.

According to the present embodiment, since the roller bearing 51 is kept in a neutral position by the plate spring 68, the rolling surface for the roller bearing 51 with respect to the oscillation guide member 9 is retained. An area of the engaging portion between the arm 16 of the small end of the connecting rod 21 and the annular cavity 23 can be widened to lower the surface pressure of the engaging portion, without impairing insertion of the small end of the connecting rod 21 into the opening 40 of the annular cavity 23.

### INDUSTRIAL APPLICABILITY

As described above, in the connecting structure between a piston and a connecting rod according to the present invention, the swing or oscillating center of the connecting rod with respect to the piston is considerably clone to the piston crown, and if the arm of the crank shaft and the connecting rod are lengthened by that amount, the displacement of the cylinder is increased without changing the dimension or the cylinder block, the exhaust measures is facilitated, and an increase of output power of the engine becomes enabled.

### EFFECTS OF THE INVENTION

(a) The lower surface of semicircular oscillation guide member is placed in contact with the upper surfaces in the form of the cylindrical depressed portions of a pair of arms formed integral with the small end of the connecting rod, and the flat upper surface of the oscillation guide member is placed in contact with the lower surface of the piston crown. Therefore, the number of superposing surfaces participated in the clearance of the sliding portion of the small end of the connecting rod is less than that of prior art, the cumulated tolerance of parts is small, the machining expenses is reduced, and the productivity is enhanced.
(b) Since the upper half portion of the oscillation guide member is engaged with the angular groove of the piston crown, a burden in the sliding portion of the arm of the connecting rod with respect to the load in the thrust direction (direction perpendicular to the crank shaft) exerting on the piston body is reduced.
(c) The oil passage extending through the oscillation guide member is opened to the superposing surface between the oscillation guide member and the piston crown to thereby suppress a change of the clearance of the sliding portion of the small end of the connecting rod due to heat.
(d) The angular opening for locating the oscillation guide member is provided in the top wall of the inner sleeve to thereby reduce the inertia mass for reciprocation of the piston, to reduce the frictional loss and to enhance the fuel consumption.
(e) The top wall plate is sandwiched between the piston crown and the annular cavity to thereby achieve the closure of the cooling oil chamber, the positioning or locating of the oscillation guide member and the simplification of parts. Further, the thickness of the skirt portion is made thicker to enhance the rigidity.
(f) Since the roller bearing between the oscillation guide member and the arm of the small end of the connecting rod is kept in a neutral position by the spring member, the rolling surface for the roller bearing with respect to the oscillation guide member is always retained.
(g) Since the lower edge of the opening which is square in section for inserting the small end of the connecting rod is downwardly expanded, the area of the engaging portion between the arm of the small end of the connecting rod and the annular cavity can be increased to lower the surface pressure of the engaging portion.
(h) Since the position of the projection of the skirt portion for supporting the annular cavity is made to be higher in level to make the center of gravity of the piston assembly close to the oscillation center of the connecting rod, the piston assembly is considerably lightened, the reciprocating inertia mass is reduced, and fuel consumption is enhanced. Further, since the large notches can be provided in the left and right peripheral walls of the skirt portion, even if the stroke of the piston is made longer, the interference between the balance weight of the crank shaft and the skirt portion can be avoided.
(i) Since the center of gravity of the piston assembly is made close to the oscillation center of the connecting rod, the length of the arm of rotational moment exerting on the piston is short, the piston is not rotated around the oscillation center of the connecting rod to impinge upon the cylinder, the slap sound is reduced, and the reliability and durability of the supporting portion for the annular cavity on the projection of the skirt portion are enhanced.

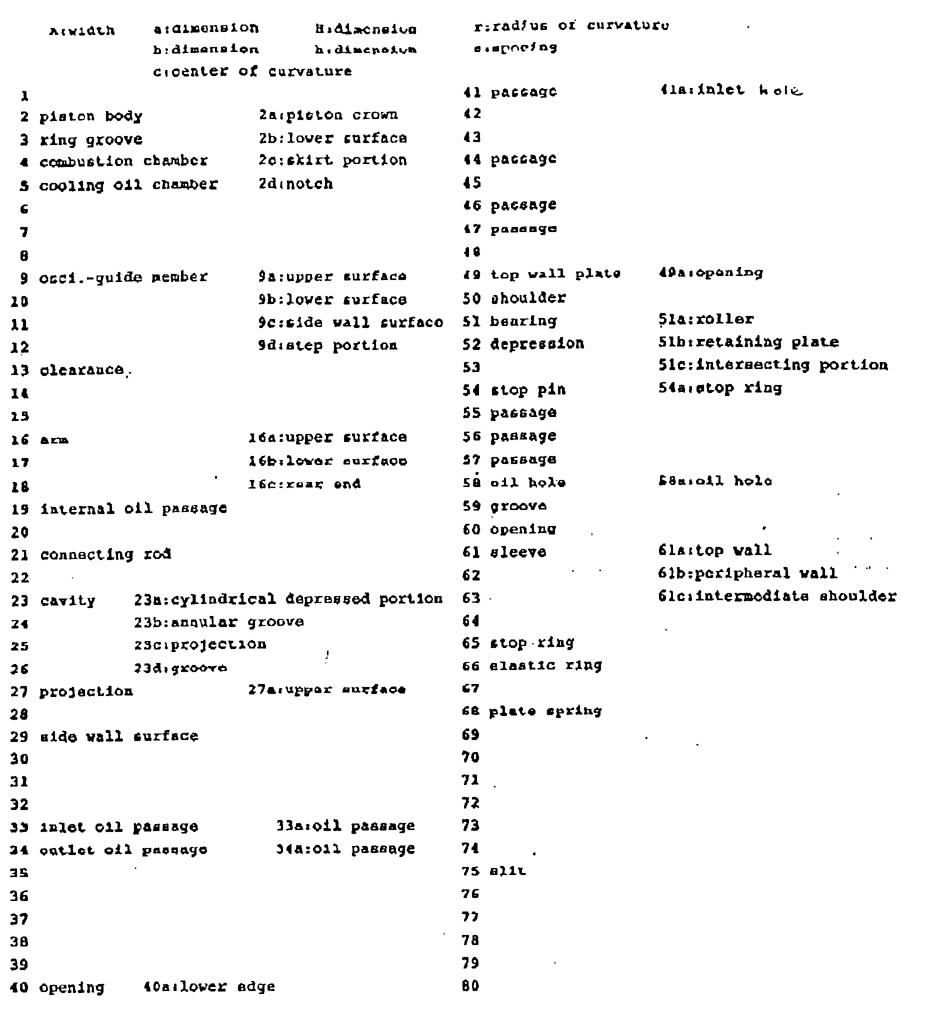

## Claims

1. A connecting structure between a piston and a connecting rod characterized in that a pair of left and right arms (16) which are semicircular in section projecting axially of a crank shaft are provided on a small end of a connecting rod, a flat upper surface of a semicircular oscillation guide member (9) is placed in contact with a lower surface of a piston crown, a cup-shaped annular cavity (23) is fitted and fixed in a skirt portion of a piston body, an opening (40) which is square in section for inserting said small end of said connecting rod is provided in a diametrically central part of said annular cavity, an upper surface of a cylindrical depressed form in section of said pair of arms of said small end of said connecting rod is engaged with a lower surface of semicircular in cross-section of said oscillation guide member, and said arm of said small end of said connecting rod is engaged with the cylindrical depressed portion (23a) formed in an upper wall surface of said annular cavity so that said small end of said connecting rod is held between oscillation guide member and said annular cavity.

2. The connecting structure between a piston and a connecting rod according to claim 1, wherein laid oscillation guide member comprised an upper half portion which is rectangular in cross-section and a lower half portion which is semicircular in cross-section, said upper half portion of said oscillation guide ember being engaged with on angular groove (59) provided in a lower surface (2b) of said piston crown, said lower half portion of said oscillation guide member being placed in sliding contact with an upper surface (16a) in the form of a cylindrical depressed surface of said arm (16) of said small end of said connecting rod.

3. The connecting structure between a piston and a connecting rod according to claim 1, wherein a cooling oil chamber (5) in the form of an annular groove is formed in said lower surface or said piston crown, an angular opening (60) for inserting said upper half portion of said oscillation guide member (9) is provided in a top wall of an inverted-cup shaped inner sleeve (61), and said top wall of said inner sleeve is placed in contact with said lower surface of said piston crown

4. The connecting structure between a piston and a connecting rod according to claim 1, wherein said cooling oil chamber (5) in the form of an annular groove is formed in said lower surface of said piston crown, and an angular opening (49a) for inserting said upper half portion of said oscillation guide member (9) is provided in a diametrically central part of a circular top wall plate (49), said top wall plate being sandwiched between said lower surface of said piston crown and said upper end surface of said annular cavity (23) whereby said annular cooling oil chamber is defined in said piston crown.

5. The connecting structure between a piston and a connecting rod according to claims 1 to 4, wherein a roller bearing (51) is disposed between said lower surface of said oscillation guide member and said arm (16) of said small end of said connecting rod, said roller bearing being provided with a retainer for controlling the movement of said roller in an axial direction.

6. The connecting structure between a piston and a connecting rod according to claim 5, wherein a spring member (68) for biasing said roller bearing to a neutral position is provided between both ends in the rolling direction of said roller bearing (51) and said inner sleeve, said top wall or said piston crown.

7. The connecting structure between a piston and a connecting rod according to claims 1 to 6, wherein in said opening (40) which is square in section for inserting said small end of said connecting rod provided in a diametrically central part of said annular cavity, a lower edge (40a) at least one side thereof is divergently inclined.

8. The connecting structure between a piston and a connecting rod according to claims 1 to 7, wherein an axial length of said inner sleeve (61) it set to a value so that said center of gravity of said piston is located in said vicinity of the oscillation center of said connecting rod.
